# EUROPEAN PATENT SPECIFICATION

(11) **EP 1 531 689 B1**
(45) Date of publication and mention of the grant of the patent: **04.12.2019**
(21) Application number: 03792589.8
(22) Date of filing: 26.08.2003
(51) Int. Cl.: A23L 33/125, A23L 33/115, A23L 33/15, A23L 33/155, A23L 33/16, A23L 33/22

(54) **COMPLETE MEAL SUBSTITUTE**
KOMPLETTMAHLZEITERSATZ
SUBSTITUT DE REPAS COMPLET

(30) Priority: 26.08.2002 SE 0202529
(43) Date of publication of application: 25.05.2005
(73) Proprietor: INDEVEX AB (PUBL), 598 37 Vimmerby (SE)
(72) Inventor: VENTURI, David, Oakville, Ontario L6M 1J5 (CA)
(74) Representative: Zacco Sweden AB
(86) International application number: PCT/IB2003/003707
(87) International publication number: WO 2004/017764

(56) References cited:
- EP-A- 0 691 079
- EP-A- 1 010 374
- EP-A- 1 155 627
- WO-A-02/11562
- WO-A-80/02226
- US-A- 5 104 676
- US-A- 5 998 363

## Description

### TECHNICAL FIELD

The invention pertains to a dry food composition product for mixing with a drinkable liquid, said product comprising fat, carbohydrates, proteins, vitamins and minerals, from a diversity in food groups including fruit, vegetable, plant, dairy, egg and other protein sources, and colloidal water sources, resulting in a physiologically balanced food composition product that is intended to replace an entire meal.

### BACKGROUND ART

Even though the importance of balanced diets has been recognised by dietitians and scientists as well as by the general public for a long time, the maintenance of a healthy diet is not only a persisting but also a growing problem in modern society. With today's accelerated pace of living, it has become increasingly difficult for ordinary people to find the time to prepare meals ensuring a daily intake of nourishment essential to the human body. The lack of time makes many people choose fast food alternatives, which often are fattening or have an inadequate nutritive value, or even skip entire important meals such as breakfast.

A further problem occurs in the composing of the food components. Even though there is a high awareness in the general public of which essential nutritive components should be included in an ordinary meal, very often in daily life it becomes difficult to estimate the amount of nutrients in the different ingredients constituting the meal. As the different food components are known to interact with each other, the total nutritive effect of the meal may be furthermore difficult to estimate.

Especially the effect of the absorbed food on the blood glucose level has shown to be of great importance for the well-being of humans. When food is eaten, digested and absorbed into the blood stream, a corresponding rise can be detected in the blood glucose level. Poorly balanced diets often include carbohydrates which, when converted to glucose, induce a rapid response of insulin. The so-called insulin spikes lead to a rapid storage of sugar, and subsequently also fat, into the cells, thus giving rise to an unnecessary amount of energy being stored in the body. Accordingly, shortly after the first meal, the blood glucose level in the blood is considerably reduced by the correspondingly rapid action of insulin, and the body signals for more glucose with feelings of hunger, tiredness, lack of concentration etc. Because of the direct need for an increase of the blood glucose level, a craving for foodstuffs with a high sugar content is induced, again starting a new cycle of drastic fluctuations in the blood glucose level, when provided with further glucose. These swift fluctuations in the blood glucose level leave the consumer with temperamental ups and downs, and invite the consumer to a habit of constant eating which also becomes a problem in controlling the weight, and furthermore also will add fat to the heart and the blood system.

It is also important to note that in order to satisfy feelings of hunger, not all foodstuffs have proven to have a long term satiating effect. As the hungry consumer strives to balance the blood glucose level, a further problem occurs in the difficulty of choosing foodstuffs able to provide a satiety for a prolonged period of time.

The maintenance of an even level of insulin in the blood has further importance; elevated levels of insulin in the blood are associated with a lowered degree of efficacy in the tissue, i.e. insulin resistance. This condition is known to have an adverse effect on several important and common diseases, such as diabetes, hypertension, arteriosclerosis and hyperlipidemia, and obesity.

In order to compensate deficiencies in the daily diet, there are a vast number of food supplements available on the market. The purpose of these food supplements is to provide the consumer with a daily dosage of essential food nutrients, which are assumed to be lacking in the ordinary food consumption. Commonly the consumer completes an inadequate daily meal with minerals and vitamins essential to the body. In addition, some people use different supplements in order to optimise their physical condition, such as products for muscle building.

However, this course of action to attain a complete meal in respect to the needs of the body is associated with certain drawbacks. Normally, it is complicated to estimate the amount of nutrients in a meal. As mentioned earlier, certain food components interact with each other so that the nutritive value of the overall meal may actually differ from the sum of the nutritive values of the individual components. When food supplements are being added, this estimation becomes even more difficult to calculate.

The consumer is furthermore provided with several food products which are intended to replace entire meals. However, these products rarely contain all the essential components for use over a prolonged period. Most of these products are in fact intended to be used only until a certain purpose is achieved, for example, different slimming products, products for muscle building, and nutrient solutions for patients suffering from different diseases. Because of the intended short time usage, these products are more often focused on solving an immediate problem and are thus not suitable for, or required to, being a replacement of a normal diet. Furthermore, a large number of the meal replacement products available on the market are composed in such a manner that a balanced physical effect on the human body system fails to appear, especially a maintenance of a stable constant blood glucose level.

WO02/11562 A2 discloses a nutritional supplement to be incorporated into the diet of an overweight or obese patient comprising a low glycemic index carbohydrate source (e.g. fructose, barley flakes and konjac mannan), a source of protein (e.g. whey protein concentrate, casein and soy) and a source of fat (e.g. vegetable oil from canola, olive and soy), and further comprising a source of green tea extract, a source of 5-hydroxytryptophan (5-HTP), and a source of chromium.

As is evident from the above, there is a need for a food composition product that provides the user with a complete balanced meal comprising all the food components essential to the body, which food composition product is ready to use and can replace at least one normal meal of the day. It is also desirable to be able to offer a food composition product that may be used for a longer period of time without causing a lack or an excess of certain components in the human body. A further object of the present invention is to provide a food composition product which has an advantageous effect on the human body system, especially on the blood glucose level, and which product produces a satiating effect for a prolonged period of time after a meal. Furthermore, it is desirable to offer a food composition product which is inexpensive and easy to manufacture.

### DISCLOSURE OF INVENTION

According to the present invention a food composition product is provided which product is intended to replace at least one entire meal. Furthermore, the food composition product substantially eliminates the disadvantages associated with previously known food composition products. The invention is defined by the claims.

A dry food composition product for mixing with a drinkable liquid according to the invention is distinguished primarily by the fact that the food composition product comprises all the essential food components readily accessible, wherein the relative amounts of the components fat, carbohydrates, proteins, vitamins and minerals of said food composition product are chosen such that an intake of said food composition product provides the consumer with a stable blood glucose level. The food composition product preferably has a weight ratio between carbohydrates, proteins and fat of the magnitude of 0.8-2.0: 1: 0.1-0.4, and more preferably a weight ratio of the magnitude of 0.8-2.0: 1: 0.1-0.3, respectively, wherein the carbohydrates are chosen from the group of foodstuffs having a low glycemic index. The weight ratio between carbohydrates, proteins and fat is yet more preferably 0.8-1.5: 1: 0.1-0.3, and most preferably 0.7-1.3: 1: 0.1-0.3. Further weight ratios between carbohydrates, proteins and fat could be 1.2-1.8: 1: 0.1-0.3, 0.8-2.0: 1: 0.15-0.25, 1.0-1.9: 1: 0.15-0.25. Said fat, carbohydrates, proteins, vitamins and minerals are derived from a diversity in food groups including fruit, vegetable, plant, dairy, egg and other protein sources, and colloidal water sources, resulting in a physiologically balanced food composition product that is intended to replace an entire meal.

The "glycemic index" (GI) is a measure of the degree to which the concentration of glucose in the blood rises after consumption of certain foodstuffs. A low glycemic index (GI) here refers to foodstuffs with a GI-value between 0-60. The glycemic index (GI) may be calculated using two different references, that is to say either the reference white bread or the reference glucose. In the measurements made on the food composition product according to the invention, the reference glucose was utilised. In order to estimate the overall glycemic effect of a meal, the concept of "glycemic load" (GL) (GI × dietary carbohydrate content) has been introduced. As the GI compares corresponding amounts of carbohydrates, providing a measure of carbohydrate quantity, but not quality, the GL-value provides the glycemic effect of realistic portion sizes of different foods. The GL-value is similar to the GI-value, a measure of the rise of the blood glucose and the subsequent secretion of insulin in the blood stream, but including the aspect of the amount of carbohydrates available in a portion of food (see Foster-Powell K., Holt SH., Brand-Miller JC., Am. J. Clin. Nutr. 76:5-56, 2002).

In addition, said composition is also proven to have a satiating effect for a longer period of time after a consumed meal, which effect is of great importance so as to keep feelings of hunger away. As has been disclosed in a previous study (Holt SH., Miller JC., Petocz., Farmakalidis E., Eur. J. Clin. Nutr. 49(9):675-690, 1995*),* different foods differ greatly in their satiating capacities. The food composition product according to the invention provides said satiating effect due to a number of reasons mentioned in the study above. The low degree of fat in the food composition product, is proven advantageous, as fatty foods are shown not to be satisfying, as well as the inclusion of foodstuffs such as eggs and apples, both of which having a high satiety index, as defined in said article. Furthermore, the food composition product according to the invention has a balanced ratio between certain important components such as the contents of protein, fibre, and water. Said components are shown in the above mentioned study to have a positive effect on said satiety.

The mutual relation between carbohydrates, proteins and fat in the food composition product has surprisingly been proven to be of significant value in maintaining the overall body system in balance, that is, avoiding deficiencies and excesses of nutrients in the systems of the body. When the body is in balance, intake of nutrients and energy is sufficient to maintain tissue needs and the amounts of nutrients and energy entering and exiting the body are equal. The above mentioned relation further provides the consumer with an amount of each component corresponding to an adequate meal when being provided with a portion of the food composition product according to the invention. In the invention the carbohydrates, proteins and fat are present in the form of 10-20 % whole eggs, 4-15 % egg albumen, 10-25 % whey, 15-30 % yellow pea, 10-25 % apple, and 5-15 % rose hips.

A further object of the invention is to provide a food composition product as described herein which is balanced so that the overall meal has a GL-value below 20, preferably below 10. As earlier mentioned, carbohydrates are metabolised into glucose by the digestive system of the human body. Until the mid-eighties, it was generally considered that the size of the carbohydrates was of primary importance regarding the blood glucose response. Today, it is known that the same carbohydrate gives rise to different blood glucose responses, due to the form in which it is included in the foodstuffs (see e.g. Björck I., Liljeberg H., Granfeldt Y, Åkerberg A., Scand. J. Nutr./Naringsforskning Vol. 40:38-42, 1996). Recently, the "glycemic index" (GI) has replaced the terminology of "fast" and "slow" carbohydrates which were related to the size of the sugars included. High GI-values indicate a rapid increase in blood glucose, and low GI-values indicate a delayed absorption rate for the glucose; i.e. carbohydrates with low GI-values are more slowly digested and absorbed. As the level of blood glucose is kept at a more even level, feelings of hunger are kept away for a prolonged period also avoiding unnecessary and unhealthy cravings for foodstuffs rich in carbohydrates. Thus, said problems are avoided with the food composition product having said GL-value, which GL-value is a product of a low GI-value and the amount of available carbohydrates. However, in addition to the food composition product having a low GL-value, the satiating effect of said product is of equal importance in order to avoid feelings of hunger.

However, even though carbohydrates from different sources may be associated with individual GI-values, the GI-value of each of the carbohydrates put together does not determine the GI of the foodstuffs. The GI is influenced by a number of factors, for example, the biochemical structure of the carbohydrate, a high amylose/amylopectin ratio, a high degree of native starch, presence of anti-nutritional substances with the ability of inhibiting amylose, and the co-ingestion of fat, fibre and protein. A problem thus occurs when trying to compose a meal which is to provide the consumer with a low glycemic index for the overall composition. Due to the contribution of a number of factors to the glycemic index, a meal properly balanced so as to avoid fluctuations in the blood glucose level may be difficult to compose.

One important factor in obtaining a low GL food composition product is, as mentioned, the co-ingestion of further components. As will be shown in Example 2, the food composition product according to the invention exhibits a desired glucose absorption rate when having a weight ratio of the carbohydrates, proteins and fat as described above.

Furthermore, the choice of carbohydrate source is, as also mentioned, another important factor in obtaining a low GL food composition product. Accordingly, carbohydrates having low GI-values are chosen. According to one embodiment of the invention the food composition product has a content comprising yellow peas, apples, and rose hips as described above, all of which comprise carbohydrates with low GI-values. The present inventors have found that when foodstuffs with an average GI-value, that is between 60-90, are included, the overall food composition product obtains a significantly higher GL-value when compared to a composition comprising only carbohydrates with a low GI-value.

According to a further embodiment of the invention, the carbohydrates, when decomposed provide the human body system with simple sugars from the group consisting of glucose, saccharose, fructose, maltose and lactose. The different sugars are advantageously present in a percentage of 2.1-2.5 %, preferably about 2.3 %, glucose, 1.8-2.2 %, preferably about 2.0 %, saccharose, 4.0-4.8 %, preferably about 4.4 % fructose, <0.03-0.05 %, preferably about <0.04 %, maltose, and 12.9-15.7 %, preferably about 14.3 % lactose.

However, it is also possible to alter the contents of the different types of sugar within the scope of the invention. In one embodiment according to the invention the food composition product is low lactose or completely free from lactose in order to meet the demands for such products. A low lactose product is directed to people who cannot tolerate milk, and thus lactose, in small amounts. It is important to note that the ready to drink product - when one serving of the food composition product consisting of 18 g powder is mixed with at least 20 cl water - gives less than 1 % lactose content per serving, which is to be recognized as low lactose content.

According to one embodiment of the invention, the food composition product comprises physiological doses of dietary fibres, i.e. between 7-12%, preferably about 8.4%. The GL of a meal is affected by the content of fibres, as a high degree of fibres helps to lower the glycemic index. Fibres are not digested, but are however necessary in order for the bowels to function correctly. The high content of fibres in the food composition product according to the invention is advantageous in improving motility (bowel movements) and thus enhancing the consumer's ability to process food efficiently. In addition, the fibres help the elimination of toxins in the cells and furthermore is recognized to reduce the cholesterol content in the blood system.

In the invention the fat of the food composition product comprises the essential fatty acids with an omega-3 to omega-6 fatty acid ratio of 1:0.5 to 1:3.0, more preferably 1:0.8 to 1:2.0, and most preferably 1:1.0 to 1:1.3. A correct balance is significant in order to maintain normal cellular and other functions. As a typical western diet consists of far more omega-6 fatty acids than omega-3 fatty acids, many meals are lacking the essential amount of the desired fatty acids and have moreover an inadequate balance of said fatty acids. The fat of the product is further composed to meet the needs for saturated, and mono-, di-, tri- and polyunsaturated fatty acids. The fat preferably comprises preferably 25-40%, more preferably 28-35%, most preferably about 29-33%, saturated fatty acids, preferably 30-45%, more preferably 32-39%, most preferably about 33-37%, monounsaturated fatty acids, and preferably 15-35%, more preferably 25-35%, most preferably about 29-33%, di- and tri-unsaturated fatty acids. Polyunsaturated fatty acids are preferably present in an amount of 3.0-3.6%.. The balance between the three main groups of fatty acids is thus optimised. The content of fat in a properly balanced meal is essential; fats contain important fat soluble vitamins and essential fatty acids which cannot be produced by the human body. The fatty acids are preferably chosen from the group consisting of myristic acid, palmitic acid, palmitoleic acid, heptadecanoic acid, stearic acid, oleic acid, linoleic acid, alfa-linolenic acid, arachidic acid, eicosadienoic acid, behenic acid, docosahexaenoic acid (DHA) and eicosapentaenoic acid (EPA). However, the invention is not restricted to the fatty acids mentioned herein. Other fatty acids which are within the scope of the invention may also be chosen. In addition, the levels of docosahexaenoic acid (DHA) and eicosapentaenoic acid (EPA) are optimised and constitute between 1.9-2.3%, preferably about 2.1% of the total fat. Cholesterol is also present in amounts which meet the body's needs. Preferably, the fat of the food composition product is mainly derived from whole eggs.

To achieve the preferred balance between saturated, monounsaturated and polyunsaturated fat the whole egg content in the food composition product is supplied from especially fed chicken in order to give the whole egg product a balance between omega-3 and omega-6 fatty acids in a rating of 1:0.7-1.5.

The food composition product is balanced with ingredients so that it offers a complete meal with less than 75 kcal per portion serving, more preferably less than 70 kcal, and most preferably less than 68 kcal, and correspondingly less than 425 kcal, more preferably less than 400 kcal, and most preferably less than 385 kcal per 100 g powdermix of the dry food composition product. The term serving here refers to a portion of the dry food composition product when dispersed in a drinkable liquid.

The food composition product is furthermore an excellent source of protein (30-45 g protein, more preferably 35-40 g, and most preferably 37-39 g per 100 g dry food composition powder), thus containing all 20 amino acids including the 8 recognized essential amino acids in physiological doses. The amino acids are suitably derived from sources such as whey, yellow pea protein, egg albumen, and whole eggs. The food composition product according to the invention is designed to ensure that a daily allowance of proteins, and essential amino acids, is met. The content of protein is further designed so that the composition of the food composition product provides a positive nitrogen balance which promotes water excretion, visceral fat utilisation and lean body mass preservation.

An adequate balance of vitamins is needed in order to convert food into energy, maintain the body, and keep it functional. Therefore, the food composition product comprises vitamins A, B, C, D, and E in physiological doses, wherein vitamins C and E contribute as important antioxidants.

In addition, the food composition product according to the invention comprises essential minerals and trace elements in physiological doses; iron (Fe), zinc (Zn), calcium (Ca), phosphorus (P), magnesium (Mg), copper (Cu), manganese (Mn), chromium (Cr), selenium (Se), silica (Si), potassium (K), and sodium (Na), wherein potassium is present in high amounts, and sodium in small amounts. Minerals are essential for the metabolic processes in the body. They act as catalysts for the major body processes, wherein they act in an interrelated manner. A lack of minerals in the body can create a deficiency, and excess may create disturbances in the body process, therefore the amounts and balance between the minerals is of great importance.

Said product is in the pH-range of 5.8 to 6.2 and acts like a buffer, thus having a positive effect on people suffering from G.E.R.D (gastroesophageal reflux disease) and Non Ulcer Dyspepsia.

In order to meet the demands of people with gluten intolerance, the food composition product is made gluten free.

Because of the demand for a balanced meal which is ready to use, the food composition product is preferably prepacked in a dry powder form in single portion packs with a net dry weight of preferably 15-20 g, more preferably 17-19 g, and most preferably about 18 g. The dry powder is readily dissolved in a drinkable liquid, preferably water, and may be consumed promptly. Missing out on meals such as breakfast, or eating fast food or snacks, due to a tight schedule may thus be avoided, and a healthy lifestyle can be maintained. In order to replace a breakfast, one or two single portion packs are preferably used, depending on the individuals need. Children are suitably provided with one single portion pack for breakfast, while adults suitably are required to consume one to two single portion packs. In order to obtain a proper intake of nourishment equivalent with a dinner, males should consume up to four single portion packs, while women are required to consume up to three. The consumption of said product should, however, not exceed more than an equalling number of portion packs containing ca 7 g of protein each corresponding to a daily intake of 0.75 g protein per kilogram body weight. The dry powder has proven to be advantageously stable to degradation, especially with regard to fatty acids, for at least three months in 25°C and 40°C, respectively. The prepacking of the food composition product also prevents exposure to air and moisture, and subsequent oxidation, when compared to packages where the consumer is intended to serve out a portion from a larger quantity of dry powder.

Said product may also be mixed with a drinkable liquid, such as milk, juice or the like. When the food composition product is mixed with juice, the content of carbohydrates is increased, providing consumers with greater needs for carbohydrates, such as growing children, to have a meal with higher energy content. A weight ratio between carbohydrates, proteins and fat is in this case preferably 1.0-2.0: 1: 0.1-0.3, more preferably 1.2-1.8: 1: 0.1-0.3, and most preferably 1.4-1.6: 1: 0.1-0.3.

Furthermore, said food composition product may also be produced in the form of a bar, thus providing the consumer with one or more portions of the food composition product in an expediently packaged form, which is/are easy to consume. The bar may be produced by any method known in the art.

The food composition product may be used as a sole source of nutrition of the daily food consumption, or may be used as a replacement for one or more meals throughout the day. As a meal replacement, the food composition product according to the invention supplies the consumer with an inexpensive meal which lowers the expenses for foodstuffs and additional food supplements.

The nutritive substances of the food composition product according to the invention are derived from both animal and vegetable sources, thereby providing all the amino acids, including the essential amino acids, fatty acids, and slow-working carbohydrates in a proper balance, all of which contribute to a low glycemic index. No artificial sweeteners, preservatives, flavorings, dyes or thickening agents are added to the product.

Moreover, the food composition product is advantageous in that it acts like an insulin mimetic. Said product has also proved to provide a stable blood glucose level, to prevent insulin spikes. In addition, basal insulin levels are lowered in all people, and long acting (basal insulin level) and short acting (insulin spike) insulin requirements are significantly reduced with insulin dependent diabetics.

The invention will now be described in greater detail with reference to the following examples, of which Example 1 describes the ingredients of one food composition product according to the invention, and Example 2 illustrates the effect on blood glucose level after consumption of a food composition product according to the invention.
**Example 1:** The ingredients of the food composition product according to the invention, wherein the components are given in grams per 100 grams or grams per kg of the dry food composition product. The composition of the fatty acids are given in percentage value.

| | | **g/100 g** | **g/18 g port.** |
|---|---|---|---|
| Protein N*6.25 | 38.3 g/100 g | 38.3 | 6.89 |
| Moisture | 5.9 g/100 g | 5.9 | 1.06 |
| Ash | 4.8 g/100 g | 4.8 | 0.86 |
| Fat | 9.1 g/100 g | 9.1 | 1.64 |
| Carbohydrates calculated | 33.5 g/100 g | 33.5 | 6.03 |
| Dietry Fibers | 8.4 g/100 g | 8.4 | 1.51 |
| | | *100.0* | *18.00* |

**Amino Acids composition**

| | | | |
|---|---|---|---|
| Tryptophan (BCR) | 4.2 g/kg | 0.4 | 0.08 |
| Cystine | 6.4 g/kg | 0.6 | 0.12 |
| Methionine | 7.0 g/kg | 0.7 | 0.13 |
| Aspartic Acid | 42.9 g/kg | 4.3 | 0.77 |
| Threonine | 16.0 g/kg | 1.6 | 0.29 |
| Serine | 21.6 g/kg | 2.2 | 0.39 |
| Glutamic Acid | 59.8 g/kg | 6.0 | 1.08 |
| Proline | 15.8 g/kg | 1.6 | 0.28 |
| Glycine | 14.6 g/kg | 1.5 | 0.26 |
| Alanine | 18.2 g/kg | 1.8 | 0.33 |
| Valine | 22.7 g/kg | 2.3 | 0.41 |
| Isoleucine | 19.9 g/kg | 2.0 | 0.36 |
| Leucine | 30.9 g/kg | 3.1 | 0.56 |
| Tyrosine | 13.2 g/kg | 1.3 | 0.24 |
| Phenylaniline | 19.4 g/kg | 1.9 | 0.35 |
| Histidine | 9.8 g/kg | 1.0 | 0.18 |
| Ornithine | <0.1 g/kg | <0.01 | <0.0018 |
| Lysine | 27.1 g/kg | 2.7 | 0.49 |
| Arginine | 27.4 g/kg | 2.7 | 0.49 |
| Hydroxyproline | <0.1 g/kg | <0.01 | <0.0018 |
| *Sum* | *376.9 g*/*kg* | *37.7* | *6.78* |

| **Fatty Acid composition** | % Tot 9.1 g/100 g | | |
|---|---|---|---|
| Myristic Acid C14 | 0.5 | 0.05 | 0.008 |
| Palmitic Acid C16 | 21.7 | 1.97 | 0.355 |
| Palmitoleic Acid C16:1 (mono unsat) | 2.7 | 0.25 | 0.044 |
| Heptadecanoic acid C17 | 0.2 | 0.02 | 0.003 |
| Stearic Acid C18 | 8.5 | 0.77 | 0.139 |
| Oleic Acid C18:1 (mono unsat) | 32.1 | 2.92 | 0.526 |

| *Omega 3*/*6 (di, tri, and tetra-unsatur)* | | | |
|---|---|---|---|
| Linolic Acid C18:2-6 | 18.1 | 1.65 | 0.296 |
| Alfa-Linoleic Acid C18:3-3 | 12.5 | 1.14 | 0.205 |
| Eicosadienoic Acid C20:4-6 | 0.9 | 0.08 | 0.015 |
| EPA C20:5-3 | 0.3 | 0.03 | 0.005 |
| Behenic Acid C22:5-3 | 0.3 | 0.03 | 0.005 |
| DHA C22:6-3 | 1.8 | 0.16 | 0.029 |
| *Total Fatty Acids* | *99.6* | *9.06* | *1.631* |

| | | | |
|---|---|---|---|
| Cholesterol | 260 mg/100 g | 0.26 | 0.05 |
| Ammonia | 3.7 g/kg | 0.37 | 0.07 |

| **Minerals** | | **mg/100 g** | **mg/18 g** |
|---|---|---|---|
| Sodium Na | 570 mg/100 g | 0.6 | 0.10 |
| Iron Fe | 5 mg/100 g | 5.0 | 0.90 |
| Zinc Zn | 1.9 mg/100 g | 1.9 | 0.34 |
| Calcium Ca | 250 mg/100 g | 250.0 | 45.00 |
| Phosphorus P | 470 mg/100 g | 470.0 | 84.60 |
| Magnesium Mg | 110 mg/100 g | 110.0 | 19.80 |
| Potassium K | 870 mg/100 g | 870.0 | 156.60 |
| Copper Cu | 0.25 mg/100 g | 0.3 | 0.05 |
| Manganese Mn | 1.6 mg/100 g | 1.6 | 0.29 |
| Chromium Cr | 0.07 mg/kg | 0.7 | 0.13 |
| Selenium Se | 0.14 mg/kg | 1.4 | 0.25 |
| Silica Si | 14000 mg/100 g | 14000.0 | 2520.00 |

| | | **mg/100 g** | **mg/18 g** |
|---|---|---|---|
| Retinol, Vitamin A | 3300 IE/100 g | 3300 | 594 |
| Vitamin D3 | <1 ug/100 g | <0,001 | <0,0002 |
| dl-Alfa-Tocopherol, Vitamin E | 8 mg/100 g | 8.0 | 1.44 |
| Thiamine Hydrochloride B1-HCl | 0.14 mg/100 g | 0.1 | 0.03 |
| Niacine Acid B3 | 0.6 mg/100g | 0.6 | 0.11 |
| Pyridoxine HCl, Vitamin B6 | 0.2 mg/100 g | 0.2 | 0.04 |
| Folic Acid Bc/M | 72 ug/100 g | 0.1 | 0.01 |
| Cyanocobalamin | 1.2 ug/100 g | 0.001 | 0.0002 |
| Beta Carotene | 0.61 mg/100 g | 0.6 | 0.11 |
| Ascorbic Acid, Vitamin C | 100 mg/100 g | 100.0 | 18.00 |

Each portion of the food composition product (18 grams) supplies the consumer with about 7 grams protein, about 6 grams carbohydrates, about 1.6 grams of fat, and with 67 kcal.
**Example 2:** The food composition product according to Example 1 was analysed with regard to B-glucose (Hemocue, Ängelholm), S-insulin (Klinisk Kemiska Laboratoriet, MAS), and P-glucose (Klinisk Kemiska Laboratoriet, Universitetssjukhuset in Lund). Measurements were similarly made on the reference glucose, and on a food composition product having an altered composition of carbohydrates. The same test person, a male, having a body weight of 80 kg was tested on four different occasions. Prior to each test a fasting glucose value was obtained. Measurements were then made 30, 60, 90, and 120 minutes after consumption of said composition. The glycemic index was calculated for a meal consisting of 158 grams of the food composition product dispersed in about 8 dl of water, which amount corresponds to about four portions of said composition, and for 158 grams of the food composition product dispersed in about 6 dl of water. The data was graphically represented with the glucose concentration on the y-axis, and with time on the x-axis. The area under the blood glucose curve was then calculated. The same procedure was applied to the reference, consisting of 50 grams of glucose dispersed in 3 dl of water. The glycemic index was given as percentage value when the areas under each blood glucose curve were being compared.

The result of the present study of a food composition product according to the invention was a calculated GL-value of 4 and 8, respectively. Such a GL-value implies that consumption of said amount of the composition according to the invention provokes an increase of blood glucose 4% and 8%, respectively, as great as that for consumption of an amount of glucose equivalent to that of said product. This low GL-value illustrates the positive effect of the present invention on the blood glucose level. Similarly, as the blood glucose curve was shown to have a flattened appearance, the food composition product is proved to have a controlled and delayed absorption rate of the digested carbohydrates. The levels of S-insulin were also exhibiting low values throughout the study.

A comparative study was made on a food composition product comprising carbohydrates with an average GI-value taken from the group consisting of vitaceous plants, specifically grapes which have a GI-value of 61. This study was performed generally with the same food composition product but with added grapes, totally approximately 10 %, and with corresponding decrease of rose hip and yellow peas, and measurements were made as above. The result of the study was a GL-value of 24.4, a value significantly higher than the food composition product according to the invention. This elevated value indicates a more rapid absorption of glucose and thus the more unfavourable absorption pattern described above. The elevated B-glucose and P-glucose peaks were followed by unfavourable S-insulin spikes, also illustrating said unfavourable absorption pattern.

The data obtained in the above mentioned measurements are given in Table 1. The values for B-glucose and P-glucose are in mmol/l, and the values for S-insulin are in mlE/l.

**Table 1**

| *Time* | *B-glu (I)¹* | *P-glu (I)* | *B-glu (II)²* | *S-ins (II)* | *B-glu (glu)³* | *S-ins (glu)* | *P-glu (glu)* | *B-glu (alt)⁴* | *S-ins (alt)* | *P-glu (alt)* |
|---|---|---|---|---|---|---|---|---|---|---|
| 0 | 5.4 | 4.6 | 4.8 | 4 | 4.7 | 4 | 5.6 | 4.5 | 4 | 5.2 |
| 30 | 5.9 | 4.2 | 5.5 | 30 | 10.4 | 28 | 11.2 | 6.8 | 41 | 7.8 |
| 60 | 3.8 | 3.4 | 4.6 | 12 | 6.9 | 41 | 7.9 | 3.3 | 18 | 3.9 |
| 90 | 4 | 3.6 | 4.1 | 6 | 4.6 | 19 | 5.4 | 2.8 | 4 | 3.5 |
| 120 | 5.1 | 3.7 | 4.4 | 6 | 2.4 | 3 | 3.3 | 4.1 | 3 | 4.7 |

| | | | | | | | | | | |
|---|---|---|---|---|---|---|---|---|---|---|
| ¹(I) A first test on 158 g of a food composition product according to the invention. ²(II) A second test on 158 g of a food composition product according to the invention. ³(glu) A test on 50 g of the reference glucose. ⁴(alt) A test on 50 g of an altered food composition product according to the invention. | | | | | | | | | | |

Further measurements performed on a food composition product according to the invention as described in Example 1 surprisingly disclosed that an additional intake of said food composition product caused a lesser raise in the GL-value than would have been expected from the intake the amount of carbohydrates contained in said product. That is to say, normally an added intake of a certain amount of carbohydrates shows a corresponding rise in the blood glucose, proportional to that amount. However, the food composition product according to the invention advantageously showed a lesser rise in the blood glucose when compared to the additional intake of that certain amount of food composition product.

Without being in any way limited by the following theoretical explanation of why further consumption of additional amounts of said food composition product exhibits a rather stable level of blood glucose both after a first intake of an amount of said product and after a second intake of an amount of said product, one could think that the composition of the food composition product is balanced in such a manner that the different ingredients interact in a metabolically optimised manner. However, the theory is not fully developed and should accordingly not be regarded as being binding to the invention.

The data obtained in this measurement are given in Table 2. The values for glucose and the food composition product are given in mmol/l, The measurements were performed using the procedures as described above.

| *Time (min.)* | *50 g glucose¹* | *22.9 g glucose²* | *72 g food composition product³* | *18 g food composition product⁴* |
|---|---|---|---|---|
| 0 | 4.5 | 4.4 | 4.4 | 4.7 |
| 30 | 8.5 | 7.3 | 5.5 | 5.6 |
| 60 | 6.9 | 5.3 | 4.1 | 4.6 |
| 90 | 4.4 | 4.2 | 4.2 | 4.6 |
| 120 | 3.6 | 3.8 | 4.6 | 4.7 |

| PAUC (= Positive Area Under Curve) | | | | |
|---|---|---|---|---|
| | *19.08* | *11.22* | *3.18* | *2.17* |

| Glycemic Load vs. 50 g glucose | | | | |
|---|---|---|---|---|
| | ***100*** | | ***16.7*** | ***11.3*** |

| Glycemic Load vs. 22.9 g glucose | | | | |
|---|---|---|---|---|
| | | ***100*** | ***28.3*** | ***19.3*** |

| | | | | |
|---|---|---|---|---|
| ¹A test made on 50 g glucose ²A test made on 22.9 g glucose ³A test made on 72 g food composition product ⁴A test made on 18 g food composition product | | | | |

## Claims

1. A dry food composition product comprising fat, carbohydrates, proteins, vitamins and minerals,
**characterized in**
**that** the carbohydrates are derived from foodstuffs having a low glycemic index; and that the relative amounts of said fat, carbohydrates, proteins, vitamins and minerals are chosen such that an intake of said food composition product provides the consumer with a stable blood glucose level,
wherein the carbohydrates, proteins and fat are present in the form of 10-20 % whole eggs, 4-15 % egg albumen, 10-25 % whey, 15-30 % yellow pea, 10-25 % apple, and 5-15 % rose hips, and
wherein the fat comprises the essential fatty acids with an omega-3 to omega-6 fatty acid ratio of 1:0.5 to 1:3.0.

2. A product according to claim 1, **characterized in that** the product weight ratio between carbohydrates, proteins and fat is of the magnitude of 0.8-2.0: 1: 0.1-0.4, respectively.

3. A product according to claim 1, **characterized in that** the product weight ratio between carbohydrates, proteins and fat is of the magnitude of 0.8-2.0: 1: 0.1-0.3, respectively.

4. A product according to any one of the preceding claims, **characterized in that** the carbohydrates are in the form of simple sugars from the group consisting of glucose, saccharose, fructose, maltose and lactose.

5. A product according to claim 4, **characterized in that** the sugars are present in a content of 2.1-2.5%, preferably about 2.3%, glucose, 1.8-2.2%, preferably about 2.0%, saccharose, 4.0-4.8%, preferably about 4.4% fructose, <0.03-0.05%, preferably about <0.04%, maltose and 12.9-15.7%, preferably about 14.3% lactose.

6. A product according to any one of the preceding claims, **characterized in that** it comprises 7-12% of dietary fibres.

7. A product according to any one of the preceding claims, **characterized in that** the fat comprises the essential fatty acids with an omega-3 to omega-6 fatty acid ratio of 1:0.8 to 1:2.0, more preferably 1:1.0 to 1:1.3.

8. A product according to any one of the preceding claims, **characterized in that** the fatty acids comprise 25-40%, saturated fatty acids, 30-45%, monounsaturated fatty acids, and 15-35%, di- and tri-unsaturated fatty acids.

9. A product according to any one of the preceding claims, **characterized in that** the levels of docosahexaenoic acid (DHA) and eicosapentaenoic acid (EPA) are optimised and constitute between 1.9-2.3%, preferably about 2.1% of the total fat.

10. A product according to any one of the preceding claims, **characterized in that** the whole egg content in the food composition product is supplied from especially fed chicken in order to give the whole egg product the preferred balance between saturated, monounsaturated and polyunsaturated fat, and the balance between omega-3 and omega-6 fatty acids in a rating of 1:0.7-1.5.

11. A product according to any one of the preceding claims, **characterized in that** it comprises all 20 amino acids including the 8 essential amino acids.

12. A product according to any one of the preceding claims, **characterized in that** it comprises vitamins A, B, C, D, and E, and the essential minerals iron (Fe), zinc (Zn), calcium (Ca), phosphorus (P), magnesium (Mg), copper (Cu), manganese (Mn), chromium (Cr), selenium (Se), silica (Si), potassium (K), and sodium (Na), wherein potassium is present in high amounts, and sodium in small amounts, in physiological doses.

13. A product according to any one of the preceding claims, **characterized in that** it is in the pH-range of 5.8 to 6.2 and acts like a buffer.

14. A product according to any one of the preceding claims, **characterized in that** it is gluten free.

15. A product according to any one of the preceding claims, **characterized in that** it comprises no, artificial sweeteners, preservatives, flavorings, dyes or thickening agents.

16. A product according to any one of the preceding claims, c**haracterized in** that the food composition product contains less than 75 kcal per portion serving, and correspondingly less than 425 kcal per 100 g powdermix of the dry food composition product.

17. A single portion pack, **characterized in that** it comprises the food composition product according to any one of the preceding claims.

18. A liquid, **characterized in that** it comprises the food composition product according to any one of claims 1-16.

19. A bar, **characterized in that** it comprises the food composition product according to any one of claims 1-16.

20. A food product, **characterized in that** it comprises the food composition product according to any one of claims 1-16.

## Patentansprüche

1. Trockene Lebensmittelzusammensetzung umfassend Fett, Kohlenhydrate, Proteine, Vitamine und Mineralstoffe,
**dadurch gekennzeichnet,**
**dass** die Kohlenhydrate aus Lebensmitteln mit einem niedrigen glykämischen Index abgeleitet sind; und
**dass** die relativen Mengen des Fettes, der Kohlenhydrate, Proteine, Vitamine und Mineralstoffe derart gewählt sind, dass die Aufnahme des Lebensmittelzusammensetzungsprodukts dem Verbraucher einen stabilen Blutzuckerspiegel bereitstellt,
wobei die Kohlenhydrate, Proteine und das Fett in Form von 10-20 % Volleiern, 4-15 % Eieralbumin, 10-25 % Molke, 15-30 % gelben Erbsen, 10-25 % Apfel und 5-15 % Hagebutten, und
wobei das Fett die essentiellen Fettsäuren mit einem Omega-3- zu Omega-6-Fettsäurenverhältnis von 1:0,5 bis 1:3,0 umfasst.

2. Produkt nach Anspruch 1, **dadurch gekennzeichnet, dass** das Produktgewichtsverhältnis zwischen Kohlenhydraten, Proteinen und Fett in der Größenordnung von bzw. 0,8-2,0: 1: 0,1-0,4 liegt.

3. Produkt nach Anspruch 1, **dadurch gekennzeichnet, dass** das Produktgewichtsverhältnis zwischen Kohlenhydraten, Proteinen und Fett in der Größenordnung von bzw. 0,8-2,0: 1: 0,1-0,3.

4. Produkt nach einem der vorgehenden Ansprüche, **dadurch gekennzeichnet, dass** die Kohlenhydrate in Form von Einfachzuckern aus der Gruppe bestehend aus Glucose, Saccharose, Fructose, Maltose und Lactose vorliegen.

5. Produkt nach Anspruch 4, **dadurch gekennzeichnet, dass** die Zucker in einer Menge von 2,1-2,5 %, vorzugsweise etwa 2,3 %, Glucose, 1,8-2,2 %, vorzugsweise etwa 2,0 %, Saccharose, 4,0-4,8 %, vorzugsweise etwa 4,4 % Fructose, <0,03-0,05 %, vorzugsweise etwa <0,04 %, Maltose und 12,9-15,7 %, vorzugsweise etwa 14,3 % Lactose vorliegen.

6. Produkt nach einem der vorgehenden Ansprüche, **dadurch gekennzeichnet, dass** es 7-12 % Ballaststoffe enthält.

7. Produkt nach einem der vorgehenden Ansprüche, wobei das Fett die essentiellen Fettsäuren mit einem Omega-3- zu Omega-6-Fettsäurenverhältnis von 1:0,8 bis 1:2,0 eher bevorzugt 1:1,0 bis 1:1,3, umfasst.

8. Produkt nach einem der vorgehenden Ansprüche, **dadurch gekennzeichnet, dass** die Fettsäuren 25-40 % gesättigte Fettsäuren, 30-45 % monoungesättigte Fettsäuren und 15-35 % di- und trigesättigte Fettsäuren umfassen.

9. Produkt nach einem der vorgehenden Ansprüche, **dadurch gekennzeichnet, dass** die Gehalte an Docosahexaensäure (DHA) und Eicosapentaensäure (EPA) optimiert sind und 1,9-2,3 %, vorzugsweise etwa 2,1 %, des Gesamtfettes darstellen.

10. Produkt nach einem der vorgehenden Ansprüche, **dadurch gekennzeichnet, dass** der Volleigehalt in dem Lebensmittelzusammensetzungsprodukt aus insbesondere gefüttertem Huhn bereitgestellt wird, um dem Volleiprodukt die bevorzugte Ausgewogenheit zwischen gesättigtem, monoungesättigtem und mehrfach ungesättigtem Fett, und die Ausgewogenheit zwischen Omega-3- und Omega-6-Fettsäuren in einem Verhältnis von 1:0,7-1,5 bereitzustellen.

11. Produkt nach einem der vorgehenden Ansprüche, **dadurch gekennzeichnet, dass** es alle 20 Aminosäuren einschließlich der 8 essentiellen Aminosäuren umfasst.

12. Produkt nach einem der vorgehenden Ansprüche, **dadurch gekennzeichnet, dass** es Vitamin A, B, C, D und E, und die essentiellen Mineralstoffe Eisen (Fe), Zink (Zn), Calcium (Ca), Phosphor (P), Magnesium (Mg), Kupfer (Cu), Mangan (Mn), Chrom (Cr), Selen (Se), Silizium (Si), Kalium (K) und Natrium (Na) umfasst, wobei Kalium in hohen Mengen und Natrium in kleinen Mengen, in physiologischen Dosen, vorliegt.

13. Produkt nach einem der vorgehenden Ansprüche, **dadurch gekennzeichnet, dass** es im pH-Bereich von 5,8 bis 6,2 liegt und als ein Puffer dient.

14. Produkt nach einem der vorgehenden Ansprüche, **dadurch gekennzeichnet, dass** es glutenfrei ist.

15. Produkt nach einem der vorgehenden Ansprüche, **dadurch gekennzeichnet, dass** es keine künstlichen Süßungsmittel, Konservierungsmittel, Aromastoffe, Farbstoffe oder Verdickungsmittel umfasst.

16. Produkt nach einem der vorgehenden Ansprüche, **dadurch gekennzeichnet, dass** das Lebensmittelzusammensetzungsprodukt weniger als 75 kcal pro Verabreichung, und entsprechend weniger als 425 kcal pro 100 g Pulvergemisch des trockenen Lebensmittelzusammensetzungsprodukts enthält.

17. Einzelportionspackung, **dadurch gekennzeichnet, dass** sie das Lebensmittelzusammensetzungsprodukt nach einem der vorgehenden Ansprüche umfasst.

18. Flüssigkeit, **dadurch gekennzeichnet, dass** sie das Lebensmittelzusammensetzungsprodukt nach einem der Ansprüche 1-16 umfasst.

19. Riegel, **dadurch gekennzeichnet, dass** er das Lebensmittelzusammensetzungsprodukt nach einem der Ansprüche 1-16 umfasst.

20. Lebensmittel, **dadurch gekennzeichnet, dass** es das Lebensmittelzusammensetzungsprodukt nach einem der Ansprüche 1-16 umfasst.

## Revendications

1. Produit de composition alimentaire sèche comprenant des matières grasses, des hydrates de carbone, des protéines, des vitamines et des minéraux,
**caractérisé en**
**ce que** les hydrates de carbone sont dérivés de produits alimentaires à faible indice glycémique ; et
ce que les quantités relatives desdites matières grasses, desdits hydrates de carbone, desdites protéines, desdites vitamines et desdits minéraux sont choisis de telle sorte qu'un apport dudit produit de composition alimentaire offre au consommateur un niveau de glucose sanguin stable,
dans lequel les hydrates de carbone, protéines et matières grasses se présentent sous la forme de 10-20 % d'œuf entier, 4-15 % de blanc de l'œuf, 10-25 % de lactosérum, 15-30 % de pois jaune, 10-25 % de pomme et 5-15 % de cynorrhodon, et
dans lequel les matières grasses comprennent les acides gras essentiels avec un rapport acides gras oméga-3 à oméga-6 de 1:0,5 à 1:3,0.

2. Produit selon la revendication 1, **caractérisé en ce que** le rapport pondéral du produit entre les hydrates de carbone, les protéines et les matières grasses est de l'ordre de 0,8-2,0: 1: 0,1-0,4, respectivement.

3. Produit selon la revendication 1, **caractérisé en ce que** le rapport pondéral du produit entre les hydrates de carbone, les protéines et les matières grasses est de l'ordre de 0,8-2.0: 1: 0,1-0,3, respectivement.

4. Produit selon l'une quelconque des revendications précédentes, **caractérisé en ce que** les hydrates de carbone se présentent sous la forme de sucres simples du groupe des glucose, saccharose, fructose, maltose et lactose.

5. Produit selon la revendication 4, **caractérisé en ce que** les sucres sont présents en une teneur de 2,1-2,5%, de préférence environ 2,3% de glucose, 1,8-2,2%, de préférence environ 2,0% de saccharose, 4,0-4,8%, de préférence environ 4,4% de fructose, <0,03-0,05%, de préférence environ <0,04%, de maltose et 12,9-15,7%, de préférence environ 14,3% lactose.

6. Produit selon l'une quelconque des revendications précédentes, **caractérisé en ce qu'**il comprend 7-12% de fibres alimentaires.

7. Produit selon l'une quelconque des revendications précédentes, **caractérisé en ce que** les matières grasses comprennent les acides gras essentiels avec un rapport acides gras oméga-3 à oméga-6 de 1:0,8 à 1:2,0, plus préférablement 1:1,0 à 1:1,3.

8. Produit selon l'une quelconque des revendications précédentes, **caractérisé en ce que** les acides gras comprennent 25-40% d'acides gras saturés, 30-45% d'acides gras mono-insaturés et 15-35% d'acides gras di et tri-insaturés.

9. Produit selon l'une quelconque des revendications précédentes, **caractérisé en ce que** les niveaux d'acide docosahexaénoïque (DHA) et d'acide eicosa-pentaénoïque (EPA) sont optimisés et se situent entre 1,9-2,3%, de préférence environ 2,1% de la graisse totale.

10. Produit selon l'une quelconque des revendications précédentes, **caractérisé en ce que** la teneur en œuf entier dans le produit de composition alimentaire est fournie à partir de poulet nourri spécialement afin de donner au produit à base d'œuf entier l'équilibre préféré entre les graisses saturées, mono-insaturées et poly-insaturées, et l'équilibre entre les acides gras oméga-3 et oméga-6 dans un rapport de 1:0,7-1,5.

11. Produit selon l'une quelconque des revendications précédentes, **caractérisé en ce qu'**il comprend la totalité des 20 acides aminés, y compris les 8 acides aminés essentiels.

12. Produit selon l'une quelconque des revendications précédentes, **caractérisé en ce qu'**il comprend les vitamines A, B, C, D et E, ainsi que les minéraux essentiels: fer (Fe), zinc (Zn), calcium (Ca), phosphore (P), magnésium (Mg), cuivre (Cu), manganèse (Mn), chrome (Cr), sélénium (Se), silice (Si), potassium (K) et sodium (Na), le potassium étant présent en grande quantité et le sodium en petites quantités, à des doses physiologiques.

13. Produit selon l'une quelconque des revendications précédentes, **caractérisé en ce qu'**il se situe dans la plage des pH de 5,8 à 6,2 et agit comme un tampon.

14. Produit selon l'une quelconque des revendications précédentes, **caractérisé en ce qu'**il ne contient pas de gluten.

15. Produit selon l'une quelconque des revendications précédentes, **caractérisé en ce qu'**il ne comprend aucun édulcorant artificiel, agent de conservation, agent aromatisant, colorant ni agent épaississant.

16. Produit selon l'une quelconque des revendications précédentes, **caractérisé en ce que** le produit de composition alimentaire contient moins de 75 kcal par portion et, en conséquence, moins de 425 kcal pour 100 g de mélange de poudre du produit de composition alimentaire sèche.

17. Emballage en une portion, **caractérisé en ce qu'**il comprend le produit de composition alimentaire selon l'une quelconque des revendications précédentes.

18. Liquide, **caractérisé en ce qu'**il comprend le produit de composition alimentaire selon l'une quelconque des revendications 1-16.

19. Barre, **caractérisée en ce qu'**elle comprend le produit de composition alimentaire selon l'une quelconque des revendications 1-16.

20. Produit alimentaire, **caractérisé en ce qu'**il comprend le produit de composition alimentaire selon l'une quelconque des revendications 1-16.
